# EUROPÄISCHE PATENTSCHRIFT

(11) **EP 1 682 777 B1**
(45) Veröffentlichungstag und Bekanntmachung des Hinweises auf die Patenterteilung: **30.05.2007**
(21) Anmeldenummer: 04765920.6
(22) Anmeldetag: 11.10.2004
(51) Int. Cl.: F04B 53/00, F04B 53/16, F04B 1/14

(54) **VERFAHREN ZUR HERSTELLUNG DER ANSCHLUSSPLATTE EINER HYDROSTATISCHEN MASCHINE**
METHOD FOR PRODUCING A CONNECTING PLATE FOR A HYDROSTATIC MACHINE
PROCEDE DE PRODUCTION D'UNE PLAQUE DE RACCORDEMENT D'UNE MACHINE HYDROSTATIQUE

(30) Priorität: 23.10.2003 DE 10349318
(43) Veröffentlichungstag der Anmeldung: 26.07.2006
(60) Teilanmeldung: 06023672.6
(73) Patentinhaber: Brueninghaus Hydromatik GmbH, 89275 Elchingen (DE)
(72) Erfinder: MOHN, Gordon, 72160 Horb (DE); ZUG, Martin, 72145 Hirrlingen (DE)
(74) Vertreter: Körfer, Thomas
(86) Internationale Anmeldenummer: PCT/EP2004/011350
(87) Internationale Veröffentlichungsnummer: WO 2005/042975

(56) Entgegenhaltungen:
- EP-A- 0 837 241
- US-A- 4 782 738
- US-A- 4 978 284
- US-A- 5 173 039

## Beschreibung

Die Erfindung betrifft ein Verfahren zur Herstellung einer Anschlußplatte einer hydrostatischen Maschine, insbesondere einer Axialkolbenmaschine.

Beispielsweise wird in der DE 199 14 268 A1 eine Anschlußplatte in einer Axialkolbenmaschine in Schrägachsenbauweise verwendet. Die Anschlußplatte verschließt einen ellipsenförmigen Gehäuseabschnitt. Ein als bikonvex geformte Steuerlinse ausgeformter Steuerkörper ist in einem kreisbahnförmigen Stütz- und Schwenklager in der Anschlußplatte verschiebbar angeordnet. Der Steuerkörper weist Öffnungen auf zur Durchleitung von Hydraulikmedium.

Weiterhin ist aus der DE 44 23 023 A1 eine Axialkolbenmaschine in Schrägscheibenbauweise mit und verstellbarem Verdrängungsvolumen bekannt. Auch die hierin beschriebene Maschine verwendet eine Anschlußplatte die dort Anschlußblock genannt wird.

Aus der US 4,978,284 A ist ferner eine Anschlussplatte einer hydrostatischen Kolbenmaschine bekannt, welche aus einem Strangprofil gefertigt wird. Dabei wird ein Anschlussplattenrohling von einem Strangprofil abgetrennt. Der Anschlussplattenrohling wird zu einer Anschlussplatte weiterverarbeitet.

Herkömmlicherweise werden solche oben erwähnten Anschlußplatten aus einzeln zu plattenförmig gegossenen oder geschmiedeten Rohlingen gefertigt.

Nachteilig dabei ist die relativ kostenintensive Herstellung solcher plattenförmiger Halbzeuge mit vielen und energieintensiven Verarbeitungsschritten. Der Herstellungsaufwand, die Herstellungskosten und die Herstellungszeit der Anschlußplatte ist dadurch deutlich erhöht. Insbesondere die Dicke der Anschlußplatte kann nur durch hohen Aufwand im Herstellungsverfahren, beispielsweise durch eine neue Gießform oder ein neues Gesenk, verändert werden.

Es ist die Aufgabe der Erfindung ein einfaches, flexibles und preisgünstiges Herstellungsverfahren für eine Anschlußplatte einer hydrostatische Maschine zu schaffen, die den Aufwand zur Herstellung einer solchen Anschlußplatte und die Anzahl der Verarbeitungsschritte verringert.

Die Aufgabe wird durch ein erfindungsgemäßes Verfahren mit den Merkmalen des Anspruchs 1 gelöst.

Bei dem erfindungsgemäßen Herstellungsverfahren zur Herstellung einer Anschlußplatte wird der als Zwischenschritt zur Herstellung der Anschlußplatte entstehende Anschlußplatten-Rohling von einem Strangprofil abgelängt und nicht einzeln, wie in herkömmlichen Herstellungsverfahren, gegossen oder geschmiedet.

Die in den Unteransprüchen ausgeführten Maßnahmen betreffen vorteilhafte Weiterbildungen des erfindungsgemäßen Herstellungsverfahrens.

Insbesondere ist es vorteilhaft, das Strangprofil durch Gießen oder Pressen herzustellen. Das Strangprofil kann dadurch besonders einfach und kostengünstig hergestellt werden.

Weiterhin ist es vorteilhaft, wenn das Strangprofil zumindest teilweise aus Aluminium, Kupfer oder Eisen besteht oder aus einer Legierung mit zumindest einem dieser Metalle. Die Anschlußplatte kann dadurch einfach mit den gewünschten Materialeigenschaften hergestellt werden.

Weiterhin ist es vorteilhaft, wenn sich das Strangprofil im Querschnitt mit der Kontur der fertigen Anschlußplatte deckt. Der von dem Strangprofil abgelängte Anschlußplatten-Rohling muß in seiner Kontur dann nicht mehr nachbearbeitet werden.

Vorteilhaft ist es zudem, wenn das Strangprofil zu zumindest zwei Anschlußplatten-Rohlingen abgelängt wird. Dadurch wird das Herstellungsverfahren deutlich einfacher, da aus einem Strangprofil mehrere Anschlußplatten-Rohlinge in einfacher Weise erzeugt werden können.

Eine bevorzugte Ausführungsform der erfindungsgemäß hergestellten Anschlußplatte ist in der Zeichnung dargestellt und wird in der nachfolgenden Beschreibung näher erläutert. Es zeigen:
- Fig. 1: eine schematisch dargestellte hydrostatische Maschine mit Anschlußplatte nach dem Stand der Technik,
- Fig. 2: ein Strangprofil mit drei abgelängten Anschlußplatten-Rohlingen zur Beschreibung des erfindungsgemäßen Herstellungsverfahrens und
- Fig. 3: ein Ausführungsbeispiel einer nach dem erfindungsgemäßen Verfahren hergestellten Anschlußplatte.

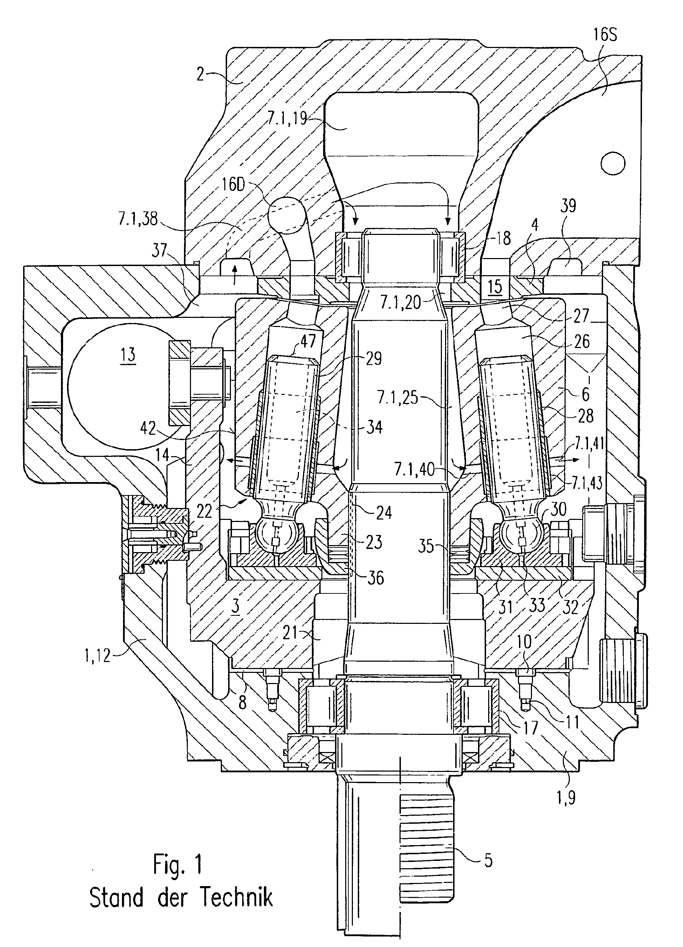

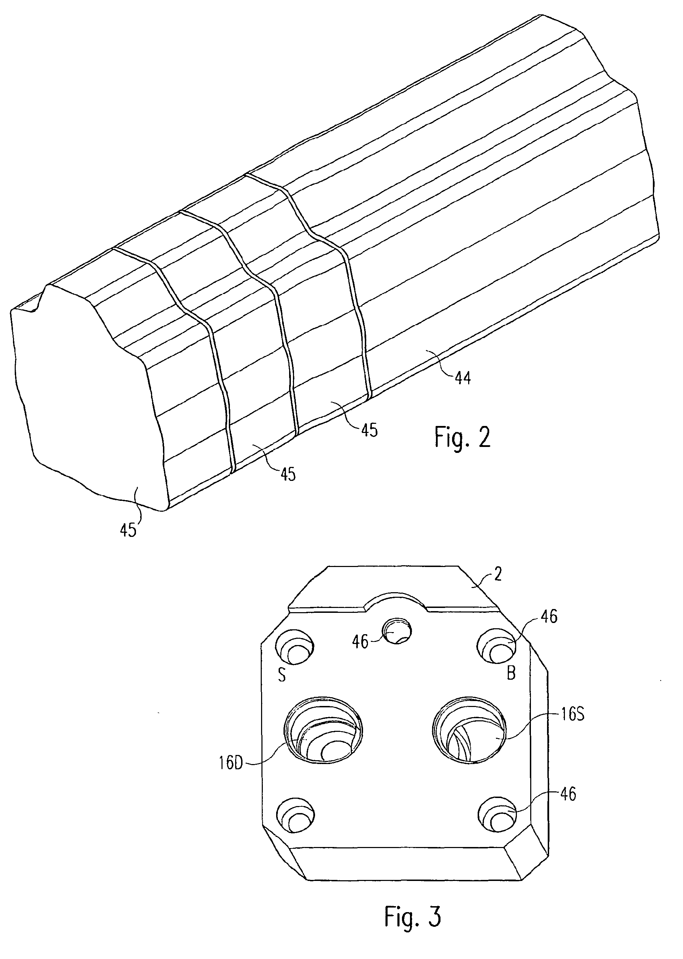

Bevor das erfindungsgemäße Verfahren zur Herstellung der Anschlußplatte anhand der Figuren 2 und 3 beschrieben werden, wird anhand der Fig. 1 eine hydrostatische Maschine mit einer Anschlußplatte gemäß dem Stand der Technik zum besseren Verständnis der Erfindung erläutert.

Die in der Fig. 1 dargestellte Axialkolbenmaschine ist in Schrägscheibenbauweise mit verstellbarem Verdrängungsvolumen und einer Stromrichtung ausgeführt und umfaßt in bekannter Weise als wesentliche Bauteile ein hohlzylindrisches Gehäuse 1 mit einem stirnseitig offenen Ende (oberes Ende in Figur 1), einer am Gehäuse 1 befestigten, dessen offenes Ende verschließenden Anschlußplatte 2, eine Hub- oder Schrägscheibe 3, einen Steuerkörper 4, eine Triebwelle 5, eine Zylindertrommel 6 und im dargestellten Ausführungsbeispiel einen optionalen Kühlkreislauf 7.1.

Die Schrägscheibe 3 ist als sogenannte Schwenkwiege mit halbzylindrischem Querschnitt ausgebildet und stützt sich mit zwei, mit gegenseitigem Abstand parallel zur Schwenkrichtung verlaufenden Lagerflächen unter hydrostatischer Entlastung an zwei entsprechend geformten Lagerschalen 8 ab, die an der Innenfläche der der Anschlußplatte 2 gegenüberliegenden Gehäuse-Stirnwand 9 befestigt sind. Die hydrostatische Entlastung erfolgt in bekannter Weise über Drucktaschen 10, die in den Lagerschalen 8 ausgebildet sind und über Anschlüsse 11 mit Druckmittel versorgt werden. Eine in einer Ausbuchtung einer zylindrischen Gehäusewandung 12 untergebrachte Stelleinrichtung 13 greift über einen sich in Richtung der Anschlußplatte 2 erstreckenden Arm 14 an der Schrägscheibe 3 an und dient zum Verschwenken derselben um eine zur Schwenkrichtung senkrechte Schwenkachse.

Der Steuerkörper 4 ist an der dem Gehäuse-Innenraum zugewandten Innenfläche der Anschlußplatte 2 befestigt und mit zwei durchgehenden Öffnungen 15 in Form von nierenförmigen Steuerschlitzen versehen, die über einen Druckkanal 16D bzw. Saugkanal 16S in der Anschlußplatte 2 an eine nicht gezeigte Druck- und Saugleitung angeschlossen sind. Der Druckkanal 16D weist einen kleineren Strömungsquerschnitt als der Saugkanal 16S auf. Die dem Gehäuse-Innenraum zugewandte und sphärisch ausgebildete Steuerfläche des Steuerkörpers 4 dient als Lagerfläche für die Zylindertrommel 6.

Die Triebwelle 5 ragt durch eine Durchgangsbohrung in der Gehäuse-Stirnwand 9 in das Gehäuse 1 hinein und ist mittels eines Lagers 17 in dieser Durchgangsbohrung sowie mittels eines weiteren Lagers 18 in einem engeren Bohrungsabschnitt einer endseitig erweiterten Sackbohrung 19 in der Anschlußplatte 2 und einem an diesen engeren Bohrungsabschnitt angrenzenden Bereich einer zentrischen Durchgangsbohrung 20 im Steuerkörper 4 drehbar gelagert. Die Triebwelle 5 durchsetzt im Inneren des Gehäuses 1 weiterhin eine zentrische Durchgangsbohrung 21 in der Schrägscheibe 3, deren Durchmesser entsprechend dem größten Schwenkausschlag der Schrägscheibe 3 bemessen ist, sowie eine zentrische Durchgangsbohrung in der Zylindertrommel 6 mit zwei Bohrungsabschnitten.

Einer dieser Bohrungsabschnitte ist in einer an der Zylindertrommel 6 angeformten, über deren der Schrägscheibe 3 zugewandte Stirnseite 22 hinausragenden hülsenförmigen Verlängerung 23 ausgebildet, über die die Zylindertrommel 6 mittels einer Keilnut-Verbindung 24 drehfest mit der Triebwelle 5 verbunden ist. Der verbleibende Bohrungsabschnitt ist mit konischem Verlauf ausgebildet. Er verjüngt sich ausgehend von seinem Querschnitt größten Durchmessers nahe dem ersten Bohrungsabschnitt bis zu seinem Querschnitt kleinsten Durchmessers nahe der am Steuerkörper 4 anliegenden Stirn- oder Lagerfläche der Zylindertrommel 6. Der von der Triebwelle 5 und diesem konischen Bohrungsabschnitt definierte ringförmige Raum ist mit dem Bezugszeichen 25 bezeichnet.

Die Zylindertrommel 6 weist allgemein axial verlaufende, abgestufte Zylinderbohrungen 26 auf, die gleichmäßig auf einem zur Triebwellenachse koaxialen Teilkreis angeordnet sind. Die Zylinderbohrungen 26 münden an der Zylindertrommel-Stirnseite 22 direkt und an der dem Steuerkörper 4 zugewandten Zylindertrommel-Lagerfläche über Mündungskanäle 27 auf dem gleichen Teilkreis wie die Steuerschlitze aus. In die an der Zylindertrommel-Stirnseite 22 direkt ausmündenden Zylinderbohrungsabschnitte größeren Durchmessers ist je eine Laufbuchse 28 eingesetzt. Die Zylinderbohrungen 26 einschließlich der Laufbuchsen 28 sind hier als Zylinder bezeichnet. Innerhalb dieser Zylinder verschiebbar angeordnete Kolben 29 sind an ihren der Schrägscheibe 3 zugewandten Enden mit Kugelköpfen 30 versehen, die in Gleitschuhen 31 gelagert und über diese an einer an der Schrägscheibe 3 befestigten ringförmigen Gleitscheibe 32 hydrostatisch gelagert sind. Jeder Gleitschuh 31 ist an seiner der Gleitscheibe 32 zugewandten Gleitfläche mit je einer nicht gezeigten Drucktasche versehen, die über eine Durchgangsbohrung 33 im Gleitschuh 31 an einen abgestuften axialen Durchgangskanal 34 im Kolben 29 angeschlossen und auf diese Weise mit dem vom Kolben 29 in der Zylinderbohrung 26 abgegrenzten Arbeitsraum des Zylinders verbunden ist. In jedem axialen Durchgangskanal 34 ist im Bereich des zugeordneten Kugelkopfes 30 eine Drossel ausgebildet. Ein mittels der Keilnut-Verbindung 24 axial verschiebbar auf der Triebwelle 5 angeordneter und durch eine Feder 35 in Richtung der Schrägscheibe 3 beaufschlagter Niederhalter 36 hält die Gleitschuhe 31 in Anlage an die Gleitscheibe 32.

Der im Gehäuse-Innenraum von den darin aufgenommenen Bauteilen 3 bis 6 etc. nicht eingenommene Raum dient als Leckraum 37, der das im Betrieb der Axialkolbenmaschine durch sämtliche Spalte, wie zum Beispiel zwischen den Zylindern und den Kolben 29, dem Steuerkörper 4 und der Zylindertrommel 6, der Schrägscheibe 3 und der Gleitscheibe 32 sowie den Lagerschalen 8 etc., austretende Leckfluid aufnimmt.

Die Funktion der vorstehend beschriebenen Axialkolbenmaschine ist allgemein bekannt und in nachstehender Beschreibung bei Einsatz als Pumpe auf das wesentliche beschränkt.

Die Axialkolbenmaschine ist für den Betrieb mit Öl als Fluid vorgesehen. Über die Triebwelle 5 wird die Zylindertrommel 6 mitsamt den Kolben 29 in Drehung versetzt. Wenn durch Betätigung der Stelleinrichtung 13 die Schrägscheibe 3 in eine Schrägstellung gegenüber der Zylindertrommel 6 verschwenkt ist, vollführen sämtliche Kolben 29 Hubbewegungen. Bei Drehung der Zylindertrommel 6 um 360° durchläuft jeder Kolben 29 einen Saug- und einen Kompressionshub, wobei entsprechende Ölströme erzeugt werden, deren Zu- und Abführung über die Mündungskanäle 27, die Steuerschlitze 15 und den Druck- und Saugkanal 16D, 16S erfolgen. Dabei läuft während des Kompressionshubs jedes Kolbens 29 Drucköl von dem betreffenden Zylinder über den axialen Durchgangskanal 34 und die Durchgangsbohrung 33 im zugeordneten Gleitschuh 31 in dessen Drucktasche und baut ein Druckfeld zwischen der Gleitscheibe 32 und dem jeweiligen Gleitschuh 31 auf, das als hydrostatisches Lager für Letzteren dient. Ferner wird Drucköl über die Anschlüsse 11 den Drucktaschen 10 in den Lagerschalen 8 zur hydrostatischen Abstützung der Schrägscheibe 3 zugeführt.

Der im dargestellten Ausführungsbeispiel vorhandene, aber im Rahmen der vorliegenden Erfindung keineswegs notwendige Kühlkreislauf 7.1 ist an den Leckraum 37 angeschlossen und umfaßt den konischen ringförmigen Raum 25 (sogenannter Leckfluid-Aufnahmeraum), die Durchgangsbohrung 20 im Steuerkörper 4, die Sackbohrung 19 (sogenannter weiterer Leckfluid-Aufnahmeraum), eine diesen mit dem Leckraum 37 verbindende Anschlußleitung 38, die in einer umlaufenden Rinne 39 in der Innenfläche der Anschlußplatte 2 ausmündet, sowie den Zylindern 26, 28 umlaufend zugeordnete Kühlbereiche, die über Zulaufkanäle 40 an den konischen ringförmigen Raum 25 angeschlossen sind und über Ablaufkanäle 41 an der zylindrischen Begrenzungsfläche 42 der Zylindertrommel 6 in den Leckraum 37 ausmünden. Sämtliche Zulaufkanäle 40 münden in den konischen ringförmigen Raum 25 an dessen Querschnitt größten Durchmessers ein und verlaufen ebenso wie sämtliche Ablaufkanäle 41 im wesentlichen radial durch die Zylindertrommel 6.

In der Ausgestaltung nach Fig. 1 ist jedem Zylinder ein Kühlbereich in Form eines Ringraumes 43 zugeordnet, der als umlaufende Nut in der Wandung des Zylinderbohrungs-Abschnitts größeren Durchmessers ausgebildet und von der Laufbuchse 28 abgedeckt ist. Der Ringraum 43 erstreckt sich von nahe dem Ausmündungsbereich der Zylinderbohrung 26 über etwa zwei Drittel der Länge derselben in Richtung der Mündungskanäle 27 und stellt somit einen der oberen Totpunktlage des Kolbens 29 zugeordneten oberen Kühlbereich dar. Je ein Zulaufkanal 40 und ein Ablaufkanal 41 münden etwa mittig in den Ringraum 43 ein und verlaufen koaxial zueinander.

Nachdem vorstehend eine übliche Axialkolbenmaschine beschrieben wurde, wird nun auf die erfindungsgemäßen Besonderheiten eingegangen.

Fig. 2 zeigt ein Strangprofil 44 von dem in einem erfinderischen Verfahrensschritt die ersten drei Anschlußplatten-Rohlinge 45 abgelängt sind. Das Strangprofil weist einen entlang seiner Längsachse durchgehend gleichen Querschnitt auf und ist entsprechend der gewünschten Kontur der fertigen Anschlußplatte 2 geformt. Dadurch können aufwendige spätere Bearbeitungsschritte zur Formgebung der Kontur der Anschlußplatte 2 entfallen. Das Strangprofil 44 wird zu mehreren Anschlußplatten-Rohlingen 45 gleicher oder verschiedener Stärke bzw. Dicke abgelängt. Dadurch ist es sehr einfach möglich, Anschlußplatten-Rohlinge 45 zur Herstellung von Anschlußplatten 2 für unterschiedliche Ausführungen hydrostatischer Maschinen, insbesondere für Pumpen unterschiedlicher Leistung, herzustellen.

Die Anschlußplatten-Rohlinge 45 sind beispielsweise durch Sägen oder Wasserstrahlschneiden vom Strangprofil 44 abgetrennt. Je nach Material des Strangprofils 44, der notwendigen Genauigkeit und der gewünschten Stückzahlen der Anschlußplatten 2 können auch andere Trennverfahren angewandt werden, beispielsweise Laserschneiden oder ein Ausbrennverfahren. In dem in Fig. 2 dargestellten Herstellungsschritt werden die Anschlußplatten-Rohlinge 45 rechtwinklig zu der Längsachse des Strangprofils 44 abgetrennt, so daß die beiden rechtwinklig zur Längsachse der Anschlußplatten-Rohlinge 45 liegenden Flächen parallel verlaufen. Beispielsweise können die Anschlußplatten-Rohlinge 45 auch durch einen schrägen Schnitt vom Strangprofil 44 abgetrennt bzw. abgelängt werden, wodurch der Anschlußplatten-Rohling 45 bzw. die Anschlußplatte 2 keilförmig bzw. konkav geformt wird. Das Strangprofil 44 besteht vorzugsweise zumindest teilweise aus Aluminium, Eisen oder Kupfer oder einer entsprechenden Legierung.

Je nach erforderlicher Stückzahl der Anschlußplatten 2 und den gewünschten Materialeigenschaften, wird das Strangprofil 44 beispielsweise durch Gießen oder Pressen hergestellt. Das Strangprofil 44 ist folglich beispielsweise als Stranggußprofil 44 oder als Strangpreßprofil 44 ausgeführt bzw. hergestellt.

Fig. 3 zeigt eine beispielhafte Ausführungsform einer erfindungsgemäß hergestellten Anschlußplatte 2. Die Anschlußplatte 2 ist in einem erfindungsgemäßen Verfahrensschritt zuerst von dem Strangprofil 44 mit einem rechtwinklig zur Längsachse des Strangprofils 44 verlaufenden Schnitt vom Strangprofil 44 abgelängt worden. In einem weiteren erfindungsgemäßen Verfahrensschritt ist der dabei entstandene Anschlußplatten-Rohling 45 weiterverarbeitet worden. Im hier gezeigten Ausführungsbeispiel sind der Druckkanal 16D, der Saugkanal 16S und mehrere andere Öffnungen 46, welche beispielsweise Bestandteil einer Schraubverbindung sein können, durch Bohren in den Anschlußplatten-Rohling 45 eingebracht. In der Weiterverarbeitung können beispielsweise auch die Anschlußleitung 38, die Sackbohrung 19 und die Rinne 39 in den Anschlußplatten-Rohling 45 eingebracht werden.

Die durch das erfindungsgemäße Verfahren hergestellte Anschlußplatte 2 kann sehr kostengünstig und schnell auch in verschiedenen Stärken bzw. Dicken hergestellt werden, so daß sich gegenüber dem aus dem Stand der Technik bekannten Herstellungsverfahren große Kostenvorteile ergeben.

## Patentansprüche

1. Verfahren zur Herstellung von Anschlussplatten (2) von hydrostatischen Maschinen mit folgenden Verfahrensschritten:
- Herstellen eines Strangprofils (44),
- Ablängen des Strangprofils (44) zu Anschlussplatten-Rohlingen (45),
- Weiterverarbeiten der abgelängten Anschlussplatten-Rohlinge (45),
**dadurch gekennzeichnet,**
**dass** das Strangprofil (44) zu Anschlussplatten-Rohlingen (45) mit unterschiedlichen Dicken abgelängt wird.

2. Verfahren nach Anspruch 1,
**dadurch gekennzeichnet,**
**dass** das Strangprofil (44) durch Gießen oder Pressen hergestellt wird.

3. Verfahren nach Anspruch 1 oder 2,
**dadurch gekennzeichnet,**
**dass** das Strangprofil (44) zumindest teilweise aus Aluminium, Eisen oder Kupfer hergestellt wird, oder aus einer Legierung mit zumindest einem dieser Metalle.

4. Verfahren nach einem der vorangegangenen Ansprüche,
**dadurch gekennzeichnet,**
**dass** die Ablängung durch Sägen, Laserschneiden, Wasserstrahlschneiden oder durch ein Ausbrennverfahren erfolgt.

5. Verfahren nach einem der vorangegangenen Ansprüche,
**dadurch gekennzeichnet,**
**dass** sich im Querschnitt die Kontur des Strangprofils (44) und die Kontur der Anschlussplatte (2) decken.

6. Verfahren nach einem der vorangegangenen Ansprüche,
**dadurch gekennzeichnet,**
**dass** das Strangprofil (44) zu zumindest zwei Anschlussplatten-Rohlingen (45) abgelängt wird.

7. Verfahren nach einem der vorangegangenen Ansprüche,
**dadurch gekennzeichnet,**
**dass** bei der Weiterverarbeitung der von dem Strangprofil (44) abgelängten Anschlussplatten-Rohlingen (45) ein Druckkanal (16D), ein Saugkanal (16S), eine Sackbohrung (19), eine Rinne (39) und/oder eine Anschlussleitung (38) in den Anschlussplatten-Rohling (45) eingebracht werden.

8. Verfahren nach einem der vorangegangenen Ansprüche,
**dadurch gekennzeichnet,**
**dass** bei der Weiterverarbeitung der von dem Strangprofil (44) abgelängten Anschlussplatten-Rohlingen (45) der Anschlussplatten-Rohling (44) entgratet wird.

## Claims

1. Method for producing connecting plates (2) of hydrostatic machines with the following method steps
- Producing an extruded profile (44)
- Cutting the extruded profile (44) to length into connecting plate-blanks (45)
- Further processing of the connecting plate-blanks (45) cut to length.
**characterised in that**
the extruded profile (44) is cut to length into connecting plate-blanks (45) of various thicknesses.

2. Method according to claim 1,
**characterised in that**
the extruded profile (44) is produced by continuous casting or extruding.

3. Method according to claim 1 or 2,
**characterised in that**
the extruded profile (44) is produced at least partially from aluminium, iron or copper, or from an alloy with at least one of these metals.

4. Method according to any one of the preceding claims,
**characterised in that**
the cutting to length takes place by sawing, laser cutting, water jet cutting or by a burning out method.

5. Method according to any one of the preceding claims,
**characterised in that**
in cross-section, the contour of the extruded profile (44) and the contour of the connecting plate (2) are congruent.

6. Method according to any one of the preceding claims,
**characterised in that**
the extruded profile (44) is cut to length into at least two connecting plate-blanks (45).

7. Method according to any one of the preceding claims,
**characterised in that**
during further processing of the connecting plate-blanks (45) cut to length from the extruded profile (44), a pressure channel (16D), a suction channel (16S), a blind bore (19), a groove (39) and/or a connecting line (38) are introduced into the connecting plate-blank (45).

8. Method according to any one of the preceding claims,
**characterised in that**
during further processing of the connecting plate-blanks (45) cut to length from the extruded profile (44) the connecting plate-blank (44) is deburred.

## Revendications

1. Procédé pour la fabrication de plaques de raccordement (2) de machines hydrostatiques, comprenant les étapes suivantes :
- fabrication d'un profil extrudé (44),
- mise à longueur du profil extrudé (44) pour former des ébauches de plaques de raccordement (45),
- transformation des ébauches de plaques de raccordement (45) mises à longueur,
**caractérisé en ce que** le profil extrudé (44) est mis à longueur pour former des ébauches de plaques de raccordement (45) avec des épaisseurs différentes.

2. Procédé selon la revendication 1,
**caractérisé en ce que** le profil extrudé (44) est produit par coulée ou par pressage.

3. Procédé selon la revendication 1 ou 2,
**caractérisé en ce que** le profil extrudé (44) est fabriqué au moins partiellement à partir d'aluminium, de fer ou de cuivre, ou d'un alliage comportant l'un au moins de ces métaux.

4. Procédé selon l'une quelconque des revendications précédentes,
**caractérisé en ce que** la mise à longueur a lieu par sciage, par découpe au laser, par découpe au jet d'eau, ou par un processus de brûlage.

5. Procédé selon l'une quelconque des revendications précédentes,
**caractérisé en ce que** le contour du profil extrudé (44) et le contour de la plaque de raccordement (2) se recouvrent en section transversale.

6. Procédé selon l'une quelconque des revendications précédentes,
**caractérisé en ce que** le profil extrudé (44) est mis à longueur pour former au moins deux ébauches de plaques de raccordement (45).

7. Procédé selon l'une quelconque des revendications précédentes,
**caractérisé en ce que** lors de la transformation des ébauches de plaques de raccordement (45) mises à longueur à partir de du profil extrudé (44), on ménage dans l'ébauche de plaque de raccordement (45) un canal de pression (16D), un canal d'aspiration (16S), un perçage borgne (19), une goulotte (39) et/ou une conduite de raccordement (38).

8. Procédé selon l'une quelconque des revendications précédentes,
**caractérisé en ce que** lors de la transformation des ébauches de plaques de raccordement (45) mises à longueur à partir du profil extrudé (44), l'ébauche de plaque de raccordement (44) est ébavurée.
